# EUROPÄISCHE PATENTSCHRIFT

(11) **EP 2 625 395 B1**
(45) Veröffentlichungstag und Bekanntmachung des Hinweises auf die Patenterteilung: **22.07.2015**
(21) Anmeldenummer: 11749169.6
(22) Anmeldetag: 29.08.2011
(51) Int. Cl.: F01L 1/26, F01L 13/06

(54) **VIERTAKT-BRENNKRAFTMASCHINE MIT EINER MOTORBREMSE**
FOUR-STROKE INTERNAL COMBUSTION ENGINE COMPRISING AN ENGINE BRAKE
MOTEUR À COMBUSTION INTERNE À QUATRE TEMPS PRÉSENTANT UN FREIN MOTEUR

(30) Priorität: 23.09.2010 AT 15842010
(43) Veröffentlichungstag der Anmeldung: 14.08.2013
(73) Patentinhaber: AVL List GmbH, 8020 Graz (AT)
(72) Erfinder: TOTH, Gyula, 2142 Nagytarcsa (HU); GRÖGER, Michael, A-8712 Proleb (AT)
(74) Vertreter: Babeluk, Michael
(86) Internationale Anmeldenummer: PCT/EP2011/064773
(87) Internationale Veröffentlichungsnummer: WO 2012/038195

(56) Entgegenhaltungen:
- WO-A1-2008/073122
- WO-A1-2010/031806
- DE-A1- 19 961 795
- DE-C1- 4 025 569
- FR-A- 386 604
- GB-A- 2 443 419
- JP-A- 60 111 010
- JP-A- 2009 174 319
- US-A1- 2006 254 545

## Beschreibung

Die Erfindung betrifft eine Viertakt-Brennkraftmaschine mit einer Motorbremse, mit zumindest einem über eine Nockenwelle und zumindest eine Ventilhebelanordnung betätigten Auslassventil pro Zylinder, sowie mit einer Einrichtung zur Vorverstellung der Auslasssteuerung, wobei die Ventilhebelanordnung einen durch einen Auslassnocken betätigten Auslasshebel und einen durch einen Bremsnocken betätigbaren Bremshebel aufweist, wobei der Bremshebel einen nockenwellenseitigen ersten Bremshebelteil und einen auslassventilseitigen zweiten Bremshebelteil aufweist, wobei die beiden Bremshebelteile unabhängig voneinander drehbar um eine Hebelachse gelagert und durch ein zwischen zwei Stellungen verstellbares Arretierelement im Motorbremsbetrieb miteinander drehverbindbar sind.

Es ist bekannt, bei einer Brennkraftmaschine zusätzlich zu den Auslassventilen ein eigenes Motorbremsventil anzuordnen, welches während der Motorbremsung getaktet oder ständig geöffnet wird. Derartige Motorbremsventile werden üblicherweise hydraulisch oder pneumatisch betätigt und sind beispielsweise aus der DE 44 23 657 C2, der DE 38 39 452 C2, der DE 38 39 450 C2, der AT 004.387 U1 oder der AT 003.600 U1 bekannt. Aus der DE 41 25 831 A1 ist weiters eine Motorbremseinrichtung bekannt, deren Motorbremsventil elektrisch betätigbar ist.

Bekannte Betätigungseinrichtungen für Motorbremsventile erfordern allerdings einen relativ hohen Bauaufwand und benötigen vergleichsweise viel Platz im Zylinderkopf, welcher in vielen Fällen nur schwer bereitgestellt werden kann. Um den Zylinderdruck abzulassen, ist meist ein zusätzlicher Behälter sowie ein Hochdruckölsystem mit Hochdruckpumpe und elektrohydraulischen Ventilen für jeden Zylinder erforderlich. Zudem weisen bekannte Motorbremseinrichtung eine hohe Zahl an Einzelteilen auf, welche die Störungsanfälligkeit erhöhen und sich nachteilig auf den Fertigungsaufwand auswirken.

Die DE 39 36 808 A1 beschreibt eine auslassnockengesteuerte Motorbremse für Viertakt-Brennkraftmaschinen, bei der die Auslasssteuerung um ungefähr einen Arbeitshub, also einen Kurbelwinkel von etwa 180°, für die Dauer der benötigten Bremswirkung vorverstellt wird. Dadurch ergibt sich eine Verdoppelung der Bremstakte und eine Dekompression am Ende des Verdichtungstaktes, wodurch eine höhere Dauerbremswirkung erreicht werden kann.

Die US 6,000,374 A beschreibt eine Motorbremse für eine Brennkraftmaschine, bei der pro Arbeitszyklus mehrere Bremsphasen verwirklicht werden können. Dabei ist neben Ein- und Auslasskipphebel ein zusätzlicher Bremskipphebel pro Zylinder vorgesehen, der - angetrieben von einem Bremsnocken - ein Auslassventil betätigt. Alle Kipphebeln verfügen dabei über ein Hydroelement an ihrem ventilseitigen Ende. Über Solenoide kann beeinflusst werden, welche Hydroelemente mit Drucköl beaufschlagt werden und welche nicht. Dadurch wird erreicht, dass im normalen Arbeitsbetrieb der Bremskipphebel nur leer läuft und das Auslassventil über den Bremskipphebel nicht betätigt wird, weil sein Hydroelement ohne Ölversorgung die Kraft nicht übertragen kann. Die Ein- und Auslasskipphebel arbeiten im Arbeitsbetrieb, solange ihre Hydroelemente mit Öl befüllt sind. Im Bremsbetrieb werden die Hydroelemente der Auslasskipphebel deaktiviert und die Hydroelemente der Bremskipphebel aktiviert. Auf diese Weise ist es auch möglich, die Ventilbewegungen hydraulisch zu manipulieren, um eine Bremsleistungsregelung und eine Anpassung zu jeder Drehzahl zu gewährleisten. Nachteilig ist, dass ein hoher Regelungsaufwand erforderlich ist.

Aus der JP 05-33684 A ist eine Motorbremseinrichtung für eine Brennkraftmaschine bekannt, welche pro Zylinder zwei Auslassventile aufweist, welche im Fahrbetrieb über eine Ventilbrücke durch einen Auslassnocken und einen Auslassventilhebel betätigt werden. Benachbart zum Auslassventilhebel ist ein zweigeteilter Bremshebel angeordnet, dessen beide Teile unabhängig voneinander um die Ventilhebelachse drehbar gelagert sind. Auf den nockenwellenseitigen Bremsventilhebelteil wirkt ein Bremsnocken ein. Der ventilseitige Bremshebelteil greift am Ventilschaft eines der beiden Auslassventile an. Im Motorbremsbetrieb sind die beiden Bremsventilhebelteile über eine Arretiereinrichtung miteinander drehverbunden, so dass die Erhebung des Bremsnockens über den Bremshebel auf das eine Auslassventil übertragen wird. Mit diesem Mechanismus kann nur einfache Bremsphasen realisiert werden.

Ähnliche Motorbremseinrichtungen mit miteinander durch ein Arretierelement miteinander verbindbaren Hebel- oder Hebelteilen sind aus den Veröffentlichungen EP 1 113 151 A2, EP 0 826 867 A1, JP 2004 084 596 A, EP 0 420 159 A1, US 5 809 952 A, JP 01-003 210 A oder EP 0 588 336 A1 bekannt. Alle diese Einrichtungen haben gemeinsam, dass sie für eine doppelphasige Bremswirkung nicht geeignet sind.

Aufgabe der Erfindung ist es, diese Nachteile zu vermeiden und bei einer Viertakt-Brennkraftmaschine auf möglichst einfache und platzsparende Weise verdoppelte Bremsphasen zu ermöglichen.

Erfindungsgemäß wird dies dadurch erreicht, dass der Auslasshebel einen nockenwellenseitigen ersten Auslasshebelteil und einen auslassventilseitigen zweiten Auslasshebelteil aufweist, wobei die beiden Auslasshebelteil unabhängig voneinander drehbar um die Hebelachse gelagert und durch das Arretierelement außerhalb des Motorbremsbetriebes miteinander drehverbindbar sind.

Vorzugsweise ist eine erste Stellung des Arretierelementes dem Fahrbetrieb und eine zweite Stellung dem Motorbremsbetrieb zugeordnet, wobei in der ersten Stellung der Auslasshebel aktiviert und der Bremshebel deaktiviert, und in der zweiten Stellung der Bremshebel aktiviert und der Auslasshebel deaktiviert ist. Somit ist gewährleistet, dass der Auslasshebel während des Bremsbetriebes und der Bremshebel während des normalen Fahrbetriebes deaktiviert ist. Dadurch lässt sich ein doppelphasiger Bremsbetrieb erreichen.

Das Arretierelement kann durch einen vorzugsweise gestuften Kolben gebildet sein, welcher in einem vorzugsweise gestuften Führungszylinder parallel zur Hebelachse verschiebbar gelagert ist. Besonders vorteilhaft ist es, wenn das Arretierelement auf einem Mittelhebel gelagert ist, welcher zwischen dem Auslasshebel und dem Bremshebel drehbar um die Hebelachse gelagert ist, wobei vorzugsweise der Mittelhebel über das Arretierelement mit dem jeweils aktivierten Ventilhebel - Bremshebel oder Auslasshebel - drehverbindbar ist. Dadurch, dass sich der Mittelhebel stets mit dem belasteten Ventilhebel mitbewegt, ergibt sich keine Relativbewegung zwischen dem Mittelhebel und den Teilen des belasteten Ventilhebels, wodurch der Verschleiß klein gehalten werden kann.

Um die mechanische Beanspruchung des Arretierelementes möglichst gering zu halten, ist das Arretierelement jeweils zwischen Druckflächen der beiden Bremshebelteile oder Auslasshebelteile schiebbar. Dadurch wird das Arretierelement nicht durch Scherkräfte, sondern nur durch Druckkräfte beansprucht und der Verschleiß wesentlich verringert.

Verdoppelte Bremsphasen können dadurch ermöglicht werden, dass der Bremsnocken in Bezug auf den Auslassnocken um etwa 90° vorauseilend phasenversetzt angeordnet ist.

Vorzugsweise wirkt der Bremshebel direkt auf den Ventilschaft eines ersten Auslassventils und der Auslasshebel indirekt über eine Ventilbrücke auf zumindest ein erstes und ein zweites Auslassventil pro Zylinder ein.

Im Rahmen der Erfindung kann weiters vorgesehen sein, dass das Arretierelement hydraulisch oder pneumatisch zwischen den beiden Stellungen, vorzugsweise entgegen der Kraft einer Rückstellfeder, verschiebbar ist, wobei vorzugsweise eine durch eine Schulter des Kolbens gebildete ringförmige Stirnfläche an einen Druckraum, vorzugsweise innerhalb des Mittelhebels, grenzt, wobei der Druckraum mit einer Druckleitung verbunden ist.

Die Erfindung wird im Folgenden anhand der Figuren näher erläutert. Es zeigen:
- Fig. 1: einen Zylinderkopf einer erfindungsgemäßen Brennkraftmaschine in einer Draufsicht;
- Fig. 2: eine Motorbremse der erfindungsgemäßen Brennkraftmaschine in einer Explosionsdarstellung;
- Fig. 3: die Motorbremse in einem Längsschnitt durch die Auslassventile und die Ventilbrücke;
- Fig. 4: die Motorbremse im Fahrbetrieb bei geschlossenen Auslassventilen;
- Fig. 5: die Motorbremse im Motorbremsbetrieb geschlossenen Auslassventilen;
- Fig. 6: die Motorbremse in einer Längsschnitt durch das Arretierelement in einer ersten Stellung;
- Fig. 7: die Motorbremse in einer Längsschnitt durch das Arretierelement in einer zweiten Stellung;
- Fig. 8: die Motorbremse im Fahrbetrieb bei geschlossenen Auslassventilen;
- Fig. 9: die Motorbremse im Fahrbetrieb bei geöffneten Auslassventilen;
- Fig. 10: die Motorbremse im Bremsbetrieb bei geschlossenen Auslassventilen;
- Fig. 11: die Motorbremse im Bremsbetrieb bei geöffnetem Auslassventil;
- Fig. 12: ein Ventilhubdiagramm der Brennkraftmaschine im normalen Fahrbetrieb; und

Fig. 13 ein Ventilhubdiagramm der Brennkraftmaschine im Bremsbetrieb.

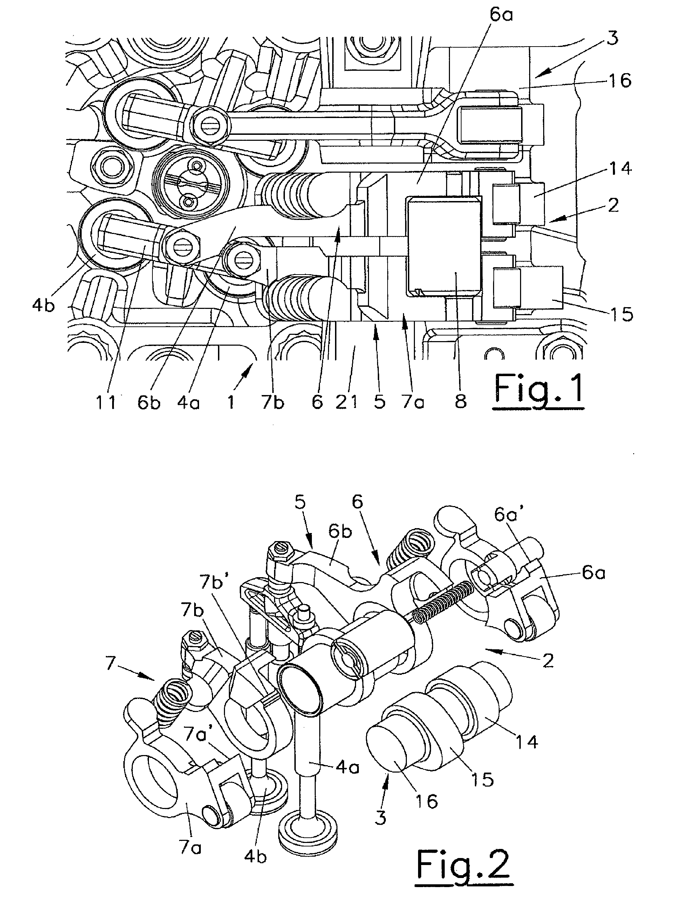

Die Fig. 1 zeigt einen Zylinderkopf 1 für die Anwendung einer erfindungsgemäßen Motorbremse 2. Die Motorbremse 2 besteht aus einer Ventilbetätigungseinrichtung 3 zum Betätigen von zwei Auslassventilen 4a, 4b pro Zylinder, wobei die Auslassventile 4a, 4b über eine Ventilhebelanordnung 5 durch eine Nockenwelle 16 betätigbar sind. Die Ventilhebelanordnung 5 weist einen Auslasshebel 6 und einen Bremshebel 7 auf, wobei sowohl der Auslasshebel 6, als auch der Bremshebel 7 zweigeteilt sind. Der Auslasshebel 6 einen nockenwellenseitigen ersten Auslasshebelteil 6a und einen auslassventilseitigen zweiten Auslasshebelteil 6b, der Bremshebel 7 einen nockenwellenseitigen ersten Bremshebelteil 7a und einen auslassventilseitigen zweiten Bremshebelteil 7b auf. Alle Hebelteile 6a, 6b; 7a, 7b sind um eine gemeinsame Hebelachse 21 schwenkbar gelagert. Sowohl der erste und zweite Auslasshebelteil 6a, 6b, als auch der erste und zweite Bremshebelteil 7a, 7b sind dabei unabhängig voneinander um die Hebelachse 21 schwenkbar. Zur Lagefixierung ist zwischen den beiden Auslasshebeln 6a, 6b und Bremshebeln 7a, 7b jeweils eine Feder 6c bzw. 7c mit - im Vergleich zu den Ventilfedern - geringer Federkraft angeordnet.

Zwischen Auslasshebel 6 und Bremshebel 7 ist ein Mittelhebel 8 ebenfalls schwenkbar um die Hebelachse 21 gelagert. Der Mittelhebel 8 ist der Tragkörper für ein Arretierelementes 9, mit welchen wahlweise die beiden Auslasshebelteile 6a, 6b oder die beiden Bremshebelteile 7a, 7b drehbar miteinander verbunden werden können. Das Arretierelement 9 ist im Ausführungsbeispiel durch einen Kolben 10 gebildet, welcher in einer dem normalen Fahrbetrieb zugeordneten ersten Stellung zwischen einander zugewandten Druckflächen 6a' und 6b' des ersten und zweiten Auslasshebelteils 6a, 6b und in einer dem Motorbremsbetrieb zugeordneten zweiten Stellung zwischen einander zugewandten Druckflächen 7a' und 7b' den ersten und zweiten Bremshebelteil 7a, 7b geschoben werden kann, so dass der Kolben 10 als Kraftübertragungselement zwischen den beiden Hebelteilen 6a, 6b bzw. 7a, 7b wirkt. Der Kolben 10 wird dabei nicht auf Scherung, sondern nur auf Druck beansprucht, so dass der Verschleiß des Arretierelementes 9 sehr klein gehalten werden kann.

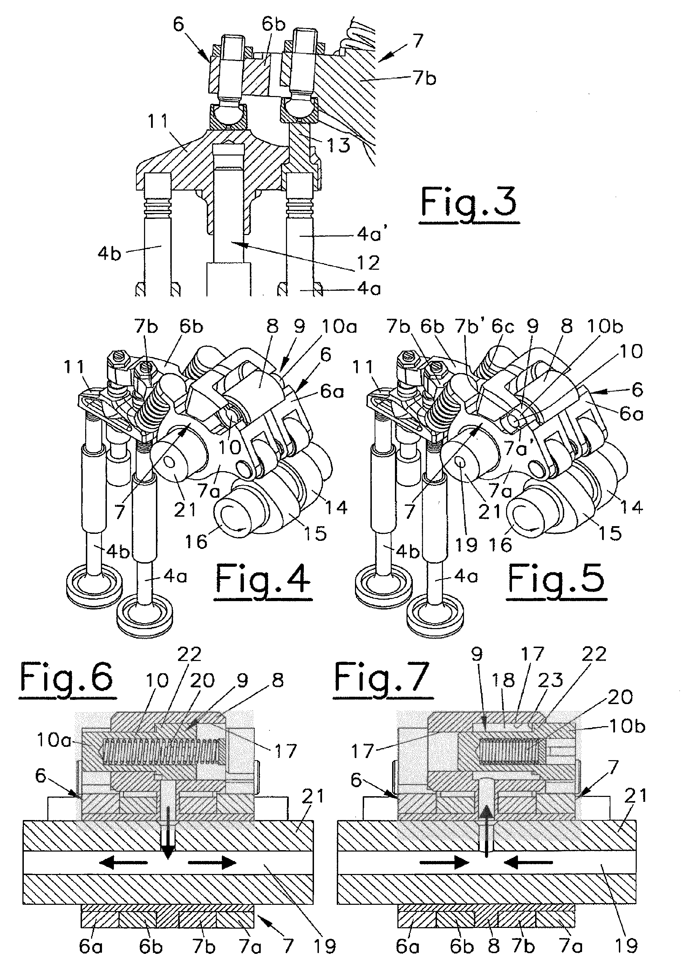

Der Auslasshebel 6 wirkt dabei über eine Ventilbrücke 11 auf beide Auslassventile 4a, 4b ein. Die Führung der Ventilbrücke 11 im Zylinderkopf 1 ist mit 12 bezeichnet. Der Bremshebel 7 dagegen wirkt über ein Stößelelement 13 direkt nur auf den Ventilschaft 4a' des ersten Auslassventils 4a ein, wie Fig. 3 zeigt.

Der Auslasshebel 6 wird durch einen Auslassnocken 14, der Bremshebel 7 wird durch einen Bremsnocken 15 der Nockenwelle 16 betätigt.

Im normalen Fahrbetrieb ist der Auslasshebel 6 aktiviert und der Bremshebel 7 deaktiviert. Im Bremsbetrieb dagegen ist der Bremshebel 7 aktiviert und der Auslasshebel 6 deaktiviert.

Wie in den Fig. 6 und Fig. 7 gezeigt ist, ist der das Arretierelement 9 bildende gestufte Kolben 10 in einem gestuften Führungszylinder 17 des Mittelhebels 8 parallel zur Hebelachse 21 verschiebbar geführt. Eine durch eine Schulter 22 gebildete ringförmige Stirnfläche 23 des Kolbens 10 grenzt an einen Druckraum 18, in welchen ein Druckkanal 19, der teilweise innerhalb der Hebelachse 21 geführt ist, einmündet. Durch Druckbeaufschlagung des Druckraumes 18 ist der Kolben 10 entgegen der Kraft der Rückstellfeder 20, zwischen den beiden Stellungen verschiebbar, wobei in jeder der beiden Endstellungen jeweils unterschiedliche Enden 10a, 10b seitlich aus dem Mittelhebel 8 herausragen und zwischen den Druckflächen 6a', 6b'; 7a', 7b' der Auslasshebelteile 6a, 6b bzw. der Bremshebelteile 7a, 7b positioniert werden.

Die Aktivierung des Bremshebels 7 und Deaktivierung des Auslasshebels 6 erfolgt, indem das Arretierelement 9 unter Druckbeaufschlagung entgegen der Rückstellkraft der Rückstellfeder 20 aus der in Fig. 6 dargestellten ersten Stellung in die in Fig. 7 dargestellte zweite Stellung geschoben wird. Zur Re-Aktivierung des Auslasshebels 6 und Deaktivierung des Bremshebels 7 wird der Druckraum 18 druckentlastet und der Kolben 10 durch die Rückstellfeder 20 wieder in die erste Stellung gedrückt.

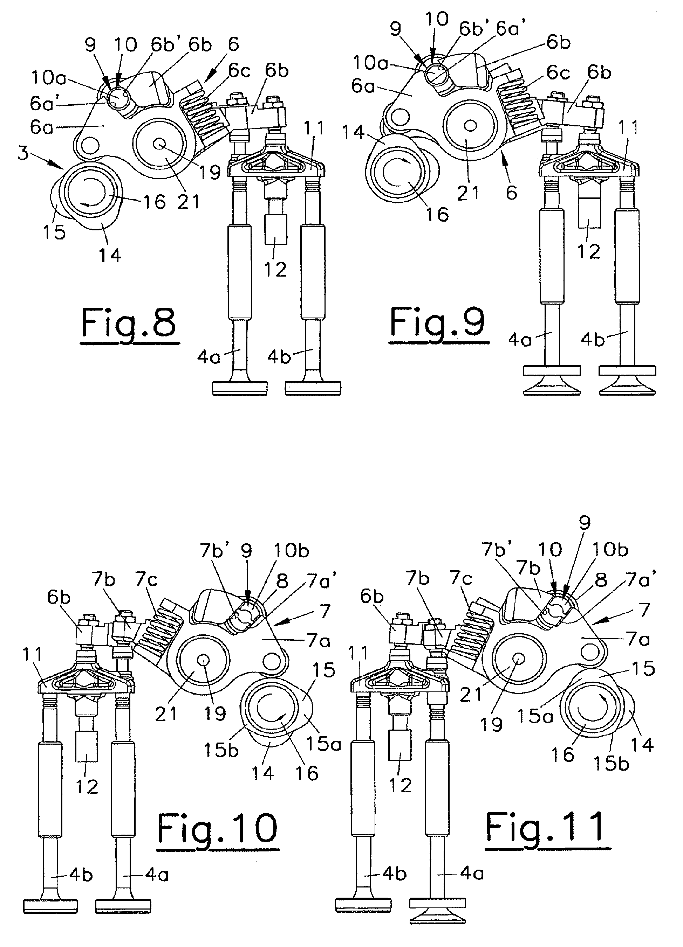

Die Fig. 4, Fig. 8 und Fig. 9 zeigen die Ventilbetätigungseinrichtung 3 während des normalen Fahrbetriebes, wobei in den Fig. 4 und Fig. 8 beide Auslassventile 4a, 4b geschlossen sind. Der Bremshebel 7 ist deaktiviert, wobei sich das Arretierelement 9 in der ersten Stellung befindet. Die Auslasshebelteile 6a und 6b sind durch das Arretierelement 9 miteinander drehverbunden. Während des Auslassventilhubes werden durch den Auslasshebel 6 über die Ventilbrücke 11 beide Auslassventile 4a, 4b in konventioneller Weise geöffnet.

Die Fig. 5, Fig. 10 und Fig. 11 zeigen die Ventilbetätigungseinrichtung 3 im Motorbremsbetrieb, wobei der Bremshebel 7 aktiviert und der Auslasshebel 6 deaktiviert ist. Das Arretierelement 9 befindet sich dabei in seiner zweiten Stellung. Die Auslasshebelteile 6a und 6b sind voneinander getrennt, die Bremshebelteile 7a, 7b hingegen durch das Arretierelement 9 miteinander drehverbunden. In den Fig. 5 und Fig. 10 sind beide Auslassventile 4a, 4b geschlossen. Fig. 11 zeigt die erste Bremsphase während der Expansionsphase T₁, wie im Folgenden noch näher erläutert wird.

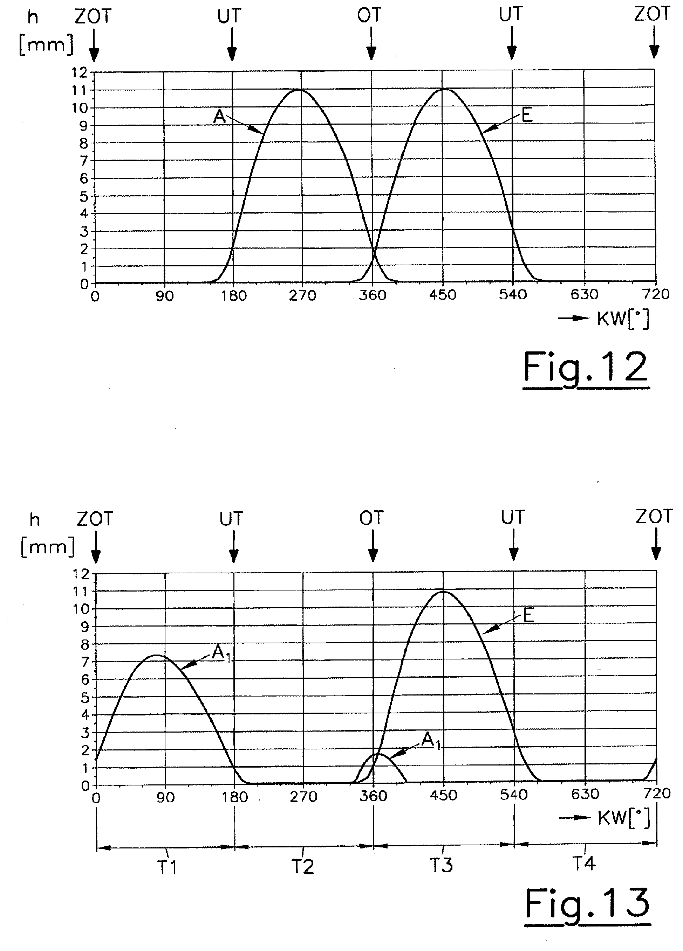

In den Fig. 12 und Fig. 13 sind jeweils Ventilhübe h über dem Kurbelwinkel KW aufgetragen, wobei Hubkurven für Einlassventile mit E bezeichnet sind. Weiters ist mit A₁ die Hubkurve des ersten Auslassventils 4a und mit A die Hubkurve der Ventilbrücke 7 und somit auch der beiden Auslassventile 4a und 4b bezeichnet. Fig. 12 zeigt die Ventilhübe h für den normalen Fahrbetrieb, wobei untere Totpunkte mit UT, obere Totpunkte des Ladungswechsels mit OT und obere Totpunkte der Zündung mit ZOT bezeichnet sind.

In Fig. 13 sind die Hubkurven h für Einlass- und Auslassventile E, A für den Bremsbetrieb dargestellt. Die Expansionsphase ist mit T₁, die Ausschubphase mit T₂, die Ansaugphase mit T₃ und die Kompressionsphase mit T₄ bezeichnet. Der Bremshebel 7 ist dabei durch die zweite Stellung des Arretierelementes 9 aktiviert, der Auslasshebel 6 gleichzeitig deaktiviert. Deutlich ist ersichtlich, dass es zu einer Öffnung des ersten Auslassventils 4a während der Expansionsphase T₁ kommt.

Da der Bremsnocken 15 neben der Haupterhebung 15a noch einen Zusatznocken 15b aufweist, erfolgt ein zweimaliges Öffnen des ersten Auslassventils 4a, wobei die zweite Öffnung im Bereich des oberen Totpunktes OT des Ladungswechsel durchgeführt wird. Diese zweite Öffnung des Auslassventils 4a ermöglicht eine lastfreie Öffnung der Einlassventile.

In der Expansionsphase T₁ erfolgt ein hoher Ventilhub des Auslassventils 4a mit großem Öffnungsquerschnitt, wodurch ein guter Füllungsgrad und somit ein hoher Kompressionsdruck am Anfang der Ausschubphase erzielt werden kann. Da sowohl in der Ausschub- als auch in der Kompressionsphase T₂, T₄ eine Bremswirkung erfolgt, wird eine hohe Bremsleistung ermöglicht.

## Patentansprüche

1. Viertakt-Brennkraftmaschine mit einer Motorbremse (2), mit zumindest einem über eine Nockenwelle (16) und zumindest eine Ventilhebelanordnung (5) betätigten Auslassventil (4a, 4b) pro Zylinder, sowie mit einer Einrichtung zur Vorverstellung der Auslasssteuerung, wobei die Ventilhebelanordnung (5) einen durch einen Auslassnocken (14) betätigten Auslasshebel (6) und einen durch einen Bremsnocken (15) betätigbaren Bremshebel (7) aufweist, wobei der Bremshebel (7) einen nockenwellenseitigen ersten Bremshebelteil (7a) und einen auslassventilseitigen zweiten Bremshebelteil (7b) aufweist, wobei die beiden Bremshebelteile (7a, 7b) unabhängig voneinander drehbar um eine Hebelachse (21) gelagert und durch ein zwischen zwei Stellungen verstellbares Arretierelement (9) im Motorbremsbetrieb miteinander drehverbindbar sind, **dadurch gekennzeichnet, dass** der Auslasshebel (6) einen nockenwellenseitigen ersten Auslasshebelteil (6a) und einen auslassventilseitigen zweiten Auslasshebelteil (6b) aufweist, wobei die beiden Auslasshebelteile (6a, 6b) unabhängig voneinander drehbar um die Hebelachse (21) gelagert und durch das Arretierelement (9) außerhalb des Motorbremsbetriebes miteinander drehverbindbar sind.

2. Brennkraftmaschine nach Anspruch 1, **dadurch gekennzeichnet, dass** eine erste Stellung des Arretierelementes (9) dem Fahrbetrieb und eine zweite Stellung dem Motorbremsbetrieb zugeordnet ist, wobei in der ersten Stellung der Auslasshebel (6) aktiviert und der Bremshebel (7) deaktiviert, und in der zweiten Stellung der Bremshebel (7) aktiviert und der Auslasshebel (6) deaktiviert ist.

3. Brennkraftmaschine nach 1 oder 2, **dadurch gekennzeichnet, dass** der Bremsnocken (15) in Bezug auf den Auslassnocken (14) um etwa 90° vorauseilend phasenversetzt angeordnet ist.

4. Brennkraftmaschine nach einem der Ansprüche 1 bis 3, **dadurch gekennzeichnet, dass** der Bremshebel (7) direkt auf den Ventilschaft (4a') eines ersten Auslassventils (4a) einwirkt.

5. Brennkraftmaschine nach einem der Ansprüche 1 bis 4, **dadurch gekennzeichnet, dass** der Auslasshebel (6) indirekt über eine Ventilbrücke (11) auf zumindest ein erstes und ein zweites Auslassventil (4a, 4b) pro Zylinder einwirkt.

6. Brennkraftmaschine nach einem der Ansprüche 1 bis 5, **dadurch gekennzeichnet, dass** das Arretierelement (9) durch einen vorzugsweise gestuften Kolben (10) gebildet ist, welcher in einem vorzugsweise gestuften Führungszylinder (17) parallel zur Hebelachse (21) verschiebbar gelagert ist.

7. Brennkraftmaschine nach einem der Ansprüche 1 bis 6, **dadurch gekennzeichnet, dass** das Arretierelement (9) auf einem Mittelhebel (8) gelagert ist, welcher zwischen dem Auslasshebel (6) und dem Bremshebel (7) drehbar um die Hebelachse (21) gelagert ist.

8. Brennkraftmaschine nach Anspruch 7, **dadurch gekennzeichnet, dass** der Mittelhebel (8) über das Arretierelement (9) mit dem jeweils aktivierten Ventilhebel - Bremshebel (7) oder Auslasshebel (6) - drehverbindbar ist.

9. Brennkraftmaschine nach einem der Ansprüche 1 bis 8, **dadurch gekennzeichnet, dass** das Arretierelement (9) jeweils zwischen Druckflächen (6a', 6b', 7a', 7b') der beiden Auslasshebelteile (6a, 6b) oder Bremshebelteile (7a, 7b) schiebbar ist.

10. Brennkraftmaschine nach einem der Ansprüche 1 bis 9, **dadurch gekennzeichnet, dass** eine durch eine Schulter (22) des Kolbens (10) gebildete ringförmige Stirnfläche (23) an einen Druckraum (18), vorzugsweise innerhalb des Mittelhebels (8), grenzt, wobei der Druckraum (18) mit einem Druckkanal (19) verbunden ist.

11. Brennkraftmaschine nach einem der Ansprüche 1 bis 10, **dadurch gekennzeichnet, dass** das Arretierelement (9) hydraulisch oder pneumatisch zwischen den beiden Stellungen, vorzugsweise entgegen der Kraft einer Rückstellfeder (20), verschiebbar ist.

## Claims

1. A four-stroke internal combustion engine, comprising an engine brake (2), at least one exhaust valve (4a, 4b) per cylinder, said valve being actuated by means of a camshaft (16) and at least one valve lever arrangement (5), and a device for advancing the exhaust control, with the valve lever arrangement (5) having an exhaust lever (6) actuated by an exhaust cam (14) and a brake lever (7) that can be actuated by a brake cam (15), with the brake lever (7) comprising a first brake lever part (7a) on the camshaft side and a second brake lever part (7b) on the exhaust valve side, with the two brake lever parts (7a, 7b) being rotatably mounted about a lever axis (21) independent of each other and being rotationally connectable with each other in engine braking operation by a locking element (9) which is adjustable between two positions, **characterised in that** the exhaust lever (6) comprises a first exhaust lever part (6a) on the camshaft side and a second exhaust lever part (6b) on the exhaust valve side, with the two exhaust lever parts (6a, 6b) being rotatably mounted about the lever axis (21) independent of each other and being rotationally connectable with each other by the locking element (9) outside of the engine braking operation.

2. An internal combustion engine according to claim 1, **characterised in that** a first position of the locking element (9) is associated with driving operation and a second position with engine braking operation, with the exhaust lever (6) being activated and the brake lever (7) deactivated in the first position, and with the brake lever (7) being activated and the exhaust lever (6) deactivated in the second position.

3. An internal combustion engine according to claim 1 or 2, **characterised in that** the brake cam (15) is arranged with respect to the exhaust cam (14) in a phase-shifted manner advanced by approximately 90°.

4. An internal combustion engine according to one of the claims 1 to 3, **characterised in that** the brake lever (7) acts directly on the valve shaft (4a') of a first exhaust valve (4a).

5. An internal combustion engine according to one of the claims 1 to 4, **characterised in that** the exhaust lever (6) acts indirectly via a valve bridge (11) on at least one first and one second exhaust valve (4a, 4b) per cylinder.

6. An internal combustion engine according to one of the claims 1 to 5, **characterised in that** the locking element (9) is formed by a preferably stepped piston (10), which is displaceably mounted in a preferably stepped guide cylinder (17) parallel to the lever axis (21).

7. An internal combustion engine according to one of the claims 1 to 6, **characterised in that** the locking element (9) is mounted on a middle lever (8), which is rotatably mounted about the lever axis (21) between the exhaust lever (6) and the brake lever (7).

8. An internal combustion engine according to claim 7, **characterised in that** the middle lever (8) is rotationally connectable via the locking element (9) with the respectively activated valve lever, i.e. the brake lever (7) or the exhaust lever (6).

9. An internal combustion engine according to one of the claims 1 to 8, **characterised in that** the locking element (9) can respectively be slid between the pressure areas (6a', 6b', 7a', 7b') of the two exhaust lever parts (6a, 6b) or brake lever parts (7a, 7b).

10. An internal combustion engine according to one of the claims 1 to 9, **characterised in that** an annular face surface (23), which is formed by a shoulder (22) of the piston (10), borders a pressure chamber (18), preferably within the middle lever (8), with the pressure chamber (18) being connected with a pressure line (19).

11. An internal combustion engine according to one of the claims 1 to 10, **characterised in that** the locking element (9) is hydraulically or pneumatically displaceable between the two positions, preferably against the force of a restoring spring (20).

## Revendications

1. Moteur à combustion interne à quatre temps comprenant un frein moteur (2) au moins une soupape d'échappement (4a, 4b) par cylindre pouvant être actionnée par un arbre à came (16) et au moins un dispositif de culbuteur (5), ainsi qu'un dispositif de préréglage de la commande de la soupape d'échappement, le dispositif de culbuteur (5) comportant un levier d'échappement (6) pouvant être actionné par une came d'échappement (14) et un levier de frein (7) pouvant être actionné par une came de frein (15), le levier de frein (7) comprenant une première partie de levier de frein (7a) située côté arbre à came et une seconde partie de levier de frein (7b) située côté soupape d'échappement, les deux parties de levier de frein (7a, 7b) étant montées indépendamment l'une de l'autre mobiles en rotation autour d'un axe de levier (21), et pouvant être reliées solidairement en rotation en mode de frein moteur, par un élément d'arrêt (9) déplaçable entre deux positions, **caractérisé en ce que**
le levier d'échappement (6) comporte une première partie de levier d'échappement (6a) située côté arbre à came et une seconde partie de levier d'échappement (6b) située côté soupape d'échappement, les deux parties de levier d'échappement (6a, 6b) étant montées indépendamment l'une de l'autre mobiles en rotation autour de l'axe de levier (21) et pouvant être reliées solidairement en rotation en dehors du mode de frein moteur par l'élément d'arrêt (9).

2. Moteur à combustion interne conforme à la revendication 1, **caractérisé en ce qu'**
une première position de l'élément d'arrêt (9) est associée au mode de roulement tandis qu'une seconde position est associée au mode de frein moteur, dans la première position, le levier d'échappement (6) étant activé et le levier de frein (7) étant désactivé tandis que dans la seconde position le levier de frein (7) est activé et le levier d'échappement (6) est désactivé.

3. Moteur à combustion interne conforme à la revendication 1 ou 2, **caractérisé en ce que**
la came de frein (7) est déphasée d'environ 90° en avant par rapport à la came d'échappement (14).

4. Moteur à combustion interne conforme à l'une des revendications 1 à 3,
**caractérisé en ce que**
le levier de frein (7) agit directement sur l'arbre de soupape (4a') d'une première soupape d'échappement (4a).

5. Moteur à combustion interne conforme à l'une des revendications 1 à 4,
**caractérisé en ce que**
le levier d'échappement (6) agit indirectement par l'intermédiaire d'un pont de soupape (11) sur au moins une première et une seconde soupapes d'échappement (4a, 4b) par cylindre.

6. Moteur à combustion interne conforme à l'une des revendications 1 à 5,
**caractérisé en ce que**
l'élément d'arrêt (9) est formé par un piston (10) de préférence à gradins qui est monté coulissant parallèlement à l'axe de levier (21) dans un cylindre de guidage (17) de préférence à gradins.

7. Moteur à combustion interne conforme à l'une des revendications 1 à 6,
**caractérisé en ce que**
l'élément d'arrêt (9) est monté sur un levier médian (8) qui est monté mobile en rotation autour de l'axe de levier (21) entre le levier d'échappement (6) et le levier de frein (7).

8. Moteur à combustion interne conforme à la revendication 7, **caractérisé en ce que**
le levier médian (8) peut être relié solidairement en rotation par l'intermédiaire de l'élément d'arrêt (9) avec le levier-levier de frein (7) ou levier d'échappement (6) respectivement activés.

9. Moteur à combustion interne conforme à l'une des revendications 1 à 8,
**caractérisé en ce que**
l'élément d'arrêt (9) peut respectivement coulisser entre des surfaces de pression (6a', 6b', 7a', 7b') des deux parties du levier d'échappement (6a, 6b) ou du levier de frein (7a, 7b).

10. Moteur à combustion interne conforme à l'une des revendications 1 à 9,
**caractérisé en ce qu'**
une surface frontale annulaire (23) formée par un épaulement (22) du piston (10) délimite une chambre de pression (18) de préférence à la partie interne du levier médian (8), cette chambre de pression (18) étant reliée à un canal de pression (19).

11. Moteur à combustion interne conforme à l'une des revendications 1 à 10,
**caractérisé en ce que**
l'élément de d'arrêt (9) peut coulisser par commande hydraulique ou pneumatique entre les deux positions, de préférence contre la force d'un ressort de rappel (20).
